# EUROPÄISCHE PATENTSCHRIFT

(11) **EP 2 912 079 B1**
(45) Veröffentlichungstag und Bekanntmachung des Hinweises auf die Patenterteilung: **08.08.2018**
(21) Anmeldenummer: 13789221.2
(22) Anmeldetag: 25.10.2013
(51) Int. Cl.: C08G 18/08, C08G 18/42, C08G 18/44, C08G 18/72, C08G 18/73, C08G 18/79, C09D 175/06, C08K 3/36, B82Y 30/00, C08G 18/12

(54) **BESCHICHTUNGSMITTEL FÜR MATTIERBARE BESCHICHTUNGEN**
COATING AGENT FOR COATINGS THAT CAN BE MATTED
MOYEN DE REVÊTEMENT POUR REVÊTEMENTS MATIFIANTS

(30) Priorität: 29.10.2012 EP 12190315
(43) Veröffentlichungstag der Anmeldung: 02.09.2015
(73) Patentinhaber: Covestro Deutschland AG, 51373 Leverkusen (DE)
(72) Erfinder: SCHRINNER, Marc Claudius, Shanghai 201507 (CN); GEWIß, Heinz-Dietmar, 40668 Meerbusch (DE); KLIPPERT, Uwe, 51399 Burscheid (DE); MELCHIORS, Martin, 42799 Leichlingen (DE)
(74) Vertreter: Levpat
(86) Internationale Anmeldenummer: PCT/EP2013/072400
(87) Internationale Veröffentlichungsnummer: WO 2014/067873

(56) Entgegenhaltungen:
- EP-A1- 0 562 436
- EP-A1- 1 418 192
- EP-A1- 2 216 353
- EP-A2- 0 926 172
- DE-A1- 10 004 499
- DE-A1-102005 061 684
- JP-A- 2007 045 024
- US-A- 5 098 938
- Lanxess: "Bayferrox 318 M", , 29. November 2011 (2011-11-29), XP055054883, Gefunden im Internet: URL:http://bayferrox.com/fileadmin/pdf/IPG /00006815_000_BF-318-M-GER.pdf [gefunden am 2013-02-28]

## Beschreibung

Die vorliegende Erfindung betrifft ein Beschichtungsmittel, das insbesondere zur Herstellung von matten, elastischen Beschichtungen geeignet ist. Weitere Gegenstände der Erfindung sind ein Verfahren zur Herstellung des Beschichtungsmittels, die Verwendung des Beschichtungsmittels zur Herstellung einer Beschichtung auf einem Substrat sowie eine Beschichtung, die durch Applikation des Beschichtungsmittels auf ein Substrat erhältlich ist.

Im Stand der Technik sind Polymersysteme beschrieben, mit deren Hilfe Beschichtungen auf Substraten hergestellt werden können, die eine hohe mechanische und chemische Beständigkeit aufweisen. Derartige Systeme sind beispielweise in der EP 1 418 192 A1 beschrieben. Die Beschichtungsmittel dieses Standes der Technik basieren auf wässrigen Polyurethanharzen, die durch Umsetzung von Polycarbonatpolyolen, Polyisocyanaten und zur Anionenbildung befähigten Verbindungen mit mindestens zwei gegenüber Isocyanatgruppen reaktive Gruppen erhältlich sind.

Ein besonderes Problem stellt die Bereitstellung matter und insbesondere tiefmatter Beschichtungen mit hoher Flexibilität oder Verformbarkeit dar, weil zur Erzeugung sehr niedriger Glanzwerte entsprechend hohe Mengen an Mattierungsmittel eingesetzt werden müssen. Hohe Konzentrationen von Mattierungsmitteln in den ausgehärteten Beschichtungen beeinflussen aber deren Eigenschaften, beispielsweise die Flexibilität und die Verformbarkeit in negativer Weise (so tritt beispielsweise Rissbildung auf). Für viele Anwendungen sind daher Beschichtungen gewünscht, die gut mattiert werden können, d.h. die bei Mattierung auf sehr niedrige Glanzwerte möglichst wenig ihrer mechanischen Eigenschaften einbüßen.

Beschichtungen, die mit Hilfe der aus der EP 1 418 192 A1 bekannten Beschichtungsmittel hergestellt werden, weisen in tiefmatten Formulierungen keine ausreichende Elastizität auf, ; ihre Mattierbarkeit ist darüber hinaus zu gering.

Es war daher die Aufgabe der vorliegenden Erfindung ein Beschichtungsmittel bereit zu stellen, mit dem matte und zugleich hochelastische Beschichtungen hergestellt werden können. Die zugrundeliegenden Bindemittel müssen eine sehr gute Mattierbarkeit aufweisen.

Diese Aufgabe ist durch ein Beschichtungsmittel gelöst, dass
a) eine wässrige Dispersion eines Hydroxy-funktionellen Prepolymers, erhältlich durch Umsetzung wenigstens der folgenden Komponenten:
   i) einer Hydroxy Gruppen aufweisenden Komponente, die ein Polycarbonatpolyol umfasst oder daraus besteht,
   ii) einem Hydroxy Gruppen aufweisenden Polyesterpolyol,
   iii) einem Isocyanat Gruppen aufweisendem Polyisocyanat,
   iv) einer Verbindung, die wenigstens zwei gegenüber Isocyanatgruppen reaktive Gruppen und wenigstens eine zur Anionenbildung befähigte Gruppe aufweist,
   v) Wasser,
   wobei die Komponenten i)-iii) und das Verhältnis der Komponenten i)-iii) so gewählt wird, dass gegenüber den Isocyanat Gruppen ein Überschuss an Hydroxy Gruppen vorhanden ist,
b) Nanopartikel mit einer zahlenmittleren Partikelgröße von 5 bis 100 nm und
c) einen Vernetzer, der wenigstens zwei gegenüber Hydroxygruppen reaktive Gruppen aufweist.
umfasst.

Es wurde überraschenderweise gefunden, dass Beschichtungen, die mit Hilfe der erfindungsgemäßen Beschichtungsmittel auf Substrate aufgebracht werden, bei sehr niedrigem Glanzgrad eine hohe Elastizität aufweisen. Daher überstehen diese Beschichtungen die mechanische Verformung auch bei hohen Dehnungen ohne Beschädigung.

Vorliegend wird unter einer gegenüber Isocyanatgruppen reaktive Gruppe ein Gruppe verstanden, die mit einer Isocyanat Gruppe unter Ausbildung einer kovalenten Bindung reagieren kann. Beispiele für gegenüber Isocyanatgruppen reaktive Gruppen sind Hydroxyl- und Amingruppen.

Unter einer zur Anionenbildung befähigten Gruppe wird vorliegend eine Gruppe verstanden, die vom molekularen Zustand in den anionischen Zustand übergehen kann. Hierzu eignen sich beispielsweise Dicarbonsäuren, Hydoxymonocarbonsäure oder Dihydroxymonocarbonsäure.

Beispiele für geeignete Dicarbonsäuren sind Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itakonische Säure, Malonsäure, Suberische Säure, 2-Methylbernsteinsäure, 3,3-Diethylglutarsäure, 2,2-Dimethylbernsteinsäure. Die entspechenden Anhydride dieser Säuren können sich ebenfalls eignen.

Es ist auch möglich Monocarbonsäuren, wie beispielsweise Benzoesäure und Hexancarbonsäure einzusetzen. Vorausgesetzt, die Funktionalität des Polyols ist größer 2. Gesättigte aliphatische oder aromatische Säuren sind bevorzugt. Dies sind beispielsweise Adipinsäure oder Isophthalsäure. Wenn man möchte, ist es ebenso möglich geringe Mengen an Polycarbonsäure einzusetzen, wie beispielsweise Trimellitsäure.

Hydroxycarbonsäuren, die als Reaktionspartner bei der Herstellung der Polyesterpolyole dienen tragen endständige Hydroxylgruppen. Dies sind beispielsweise Hydroxycapronsäure, Hydroxybuttersäure, Hydroxydecansäure, Hydroxystearinsäure und andere entsprechende. Geeignete Laktone sind beispielsweise Caprolactone oder Butyrolactone.

Gemäß einer ersten bevorzugten Ausführungsform der Erfindung können die Nanopartikel eine zahlenmittlere Partikelgröße von 5 bis 100 nm aufweisen.

Die zahlenmittlere Partikelgröße der Nanopartikel kann gemäß Transmissionselektronenmikroskopie, Lichtstreuung, analytischer Ultrazentrifuge oder Photonenkorrelationsspektroskopie bestimmt werden.

Ebenfalls bevorzugt ist, wenn die Nanopartikel eine spezifische Oberfläche von 100 m²/g bis 1000 m²/g, bevorzugt von 200 bis 500 m²/g und besonders bevorzugt von 250 bis 400 m²/g aufweisen.

Die Bestimmung der spezifische Oberfläche der Nanopartikel kann gemäß BET-Methode (DIN ISO 9277:2003-05) erfolgen.

Bevorzugt ist weiterhin, dass es sich bei den Nanopartikeln um anorganische Nanopartikel handelt.

Die Nanopartikel können insbesondere Siliziumdioxid, Titandioxid, Aluminiumoxid, Aluminiumdioxid, Mangandioxid, Manganoxid, Zinkoxid, Zinkdioxid, Ceroxid, Cerdioxid, Eisenoxid, Eisendioxid und / oder Calciumcarbonat umfassen oder daraus bestehen. Bevorzugt ist hierbei weiterhin, dass die Nanopartikel Siliziumdioxid, Titandioxid, Aluminiumoxid, Aluminiumdioxid, Mangandioxid, Manganoxid, Zinkoxid, Zinkdioxid, Ceroxid, Cerdioxid und / oder Calciumcarbonat umfassen oder daraus bestehen. Besonders bevorzugt können sie aus Siliziumdioxid bestehen.

In Weiterbildung der Erfindung ist vorgesehen, dass das Beschichtungsmittel zusätzlich wenigstens ein Mattierungsmittel d) umfasst.

Bespiele für geeignete Mattierungsmittel sind Acematt 3300, 3200 von Evonik, als auch TS 100 und OK 412 von Evonik.

Bei der Hydroxy Gruppen aufweisenden Komponente i) kann es sich beispielsweise um Ethylenglykol, 1,2- und 1,3-Propylenglykol, 1,3-, 1,4- und 2,3-Butandiol, 1,6-Hexandiol, 2,5-Hexandiol, Trimethylhexandiol, Diethylenglykol, Triethylenglykol, hydriertes Bisphenol, 1,4-Cyclohexandiol, 1,4-Cyclohexandimethanol, Neopentylglykol und/oder Trimethylpentandiol, Trimethylolpropan und/oder Glycerin handeln.

Bevorzugt ist weiterhin, dass die Hydroxy Gruppen aufweisende Komponente i) verschieden von der Komponente ii) ist. Vorliegend ist unter "verschieden von" bevorzugt zu verstehen, dass die Komponenten i) und ii) unterschiedliche chemische Strukturen aufweisen.

Die Hydroxy Gruppen aufweisende Komponente i) umfasst ein Polycarbonatpolyol oder besteht daraus.

Geeignete Polycarbonate sind beispielsweise durch Umsetzung von Diphenylcarbonat, Dimethylcarbonat oder Phosgen mit Polyolen, bevorzugt Diolen erhältlich. Als Diole können dabei z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethyl-cyclohexan, 2-Methyl-1,3-propandiol, 2,2,4-Trimethylpentandiol-1,3, Dipropylen-glykol, Polypropylenglykole, Dibutylenglykol, Polybutylenglykole, Bisphenol A, Tetrabrombisphenol A aber auch Lactonmodifizierte Diole verwendet werden. Bevorzugt ist, wenn das Diol 40 bis 100 Gew.-% Hexandiol, bevorzugt 1,6-Hexandiol und / oder Hexandiol-Derivate, besonders bevorzugt solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton oder durch Veretherung von Hexandiol mit sich selbst zum Di- oder Trihexylenglykol erhalten wurden, enthält.

Auch die in der DE-A 37 17 060 beschriebenen Polyether-Polycarbonatdiole können eingesetzt werden.

Bevorzugt sind die Polycarbonatpolyole linear aufgebaut. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolethan, Pentaerythrit, Chinit, Mannit, und Sorbit, Methylglykosid oder 1,3:4,6-Dianhydrohexite.

Bevorzugt ist auch, wenn das Polycarbonatpolyol ein gewichtsmittleres Molekulargewicht von 500 bis 3000 g/mol, bevorzugt 650 bis 2500 g/mol und besonders bevorzugt 1000 bis 2200 g/mol aufweist.

Das gewichtsmittlere Molekulargewicht des Polycarbonatpolyols kann mittels GPC (Gelpermeationschromatographie) bestimmt werden.

Bei dem Hydroxy Gruppen aufweisenden Polyesterpolyol ii) kann es sich insbesondere um Verbindungen handeln, die ein zahlenmittleres Molekulargewicht Mₙ von 400 bis 6000 Da und bevorzugt von 600 bis 3000 Da aufweisen. Ihre Hydroxylzahl kann 22 bis 400, bevorzugt 50 bis 300 und besonders bevorzugt 80 bis 200 mg KOH/g betragen. Die OH-Funktionalität kann im Bereich von 1,5 bis 6, bevorzugt von 1,8 bis 3 und besonders bevorzugt von 1,9 bis 2,5 liegen.

Gut geeignete Hydroxy Gruppen aufweisende Polyesterpolyole ii) sind die an sich bekannten Polykondensate aus Di- sowie gegebenenfalls Poly(Tri,Tetra)olen und Di- sowie gegebenenfalls Poly(Tri,-Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin Propandiol oder Butandiol(1,4), bevorzugt sind Hexandiol(1,6), Neopentylglykol oder Hydroxypivalinsäureneopentylglykolester. Gegebenenfalls können auch Polyole wie beispielsweise Trimethylolpropan, Glycerin, Erythrit, Pentaerythrit, Trimethylolbenzol oder Trishydroxyethylisocyanurat mitverwendet werden.

Geeignete Dicarbonsäuren sind beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Die möglichen Anhydride dieser Säuren sind ebenfalls geeignet. Im Sinne der vorliegenden Erfindung werden die Anhydride immer durch den Ausdruck "Säure" mitumfasst.

Es können auch Monocarbonsäuren, wie Benzoesäure und Hexancarbonsäure verwendet werden, vorausgesetzt, dass die mittlere Funktionalität des Polyols höher als 2 ist. Gesättigte aliphatische oder aromatische Säuren wie Adipinsäure oder Isophthalsäure sind bevorzugt. Gegebenenfalls können auch kleinere Mengen Polycarbonsäure, wie Trimellitsäure miteingesetzt werden.

Hydroxycarbonsäuren, die als Reaktionsteilnehmer bei der Herstellung eines Polyesterpolyols mit endständigen Hydroxylgruppen verwendet werden können, sind beispielsweise Hydroxycapronsäure, Hydroxybuttersäure, Hydroxydecansäure, Hydroxystearinsäure und dergleichen. Geeignete Lactone sind z.B. Caprolacton oder Butyrolacton.

Geeignete Polyisocyanate iii) sind z.B. Diisocyanate des Molekulargewichtsbereichs 140 bis 400 mit aliphatisch, cycloaliphatisch, araliphatisch und / oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate. Bevorzugt handelt es sich um Polyisocyanate oder Polyisocyanatgemische der genannten Art mit ausschließlich aliphatisch und / oder cycloaliphatisch gebundenen Isocyanatgruppen. Besonders bevorzugte sind Polyisocyanate oder Polyisocyanatgemische auf Basis von HDI, IPDI und / oder 4,4'-Diisocyanatodicyclohexylmethan.

Neben diesen einfachen Diisocyanaten sind auch solche Polyisocyanate geeignet, die Heteroatome in dem die Isocyanatgruppen verknüpfenden Rest enthalten und / oder eine Funktionalität von mehr als 2 Isocyanat-Gruppen pro Molekül besitzen. Die erstgenannten sind z.B. durch Modifizierung einfacher aliphatischer, cycloaliphatischer, araliphatischer und / oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Iminooxadiazindion- und / oder Oxadiazintrionstruktur; als Beispiel für ein nicht-modifiziertes Polyisocyanat mit mehr als 2 Isocyanat-Gruppen pro Molekül sei z.B. 4-Isocyanatomethyl-1,8-octandiisocyanat (Nonantriisocyanat) genannt.

Das Polyisocyanat iii) kann insbesondere ein aliphatisches Isocyanat, bevorzugt ein aliphatisches Diisocyanat und besonders bevorzugt wenigstens eine Verbindung ausgewählt aus der Gruppe von Hexamethylendiisocyanat, Isophorondiisocyanat, 1-Isocyanato-4-[(4-isocyanatocyclohexyl) methyl]cyclohexan umfassen.

Bei der Verbindung iv) kann es sich um ionische oder potentiell ionische Verbindungen handeln. Beispiele sind Mono- und Dihydroxycarbonsäuren, Mono- und Diaminocarbonsäuren, Mono- und Dihydroxysulfonsäuren, Mono- und Diaminosulfonsäuren und ihre Salze wie Dihydroxycarbonsäuren, Hydroxypivalinsäure, N-(2-Aminoethyl)-β,β-alanin, 2-(2-Amino-ethylamino)-ethansulfonsäure, Ethylendiaminpropyl- oder Butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und / oder Ammoniumsalze; das Addukt von Natriumbisulfit an Buten-2-diol-1,4-Polyethersulfonat oder das propoxylierte Addukt aus 2-Butendiol und NaHSO₃ (z.B. in der DE-A 2 446 440, Seite 5-9, Formel I-III). Bevorzugte ionische oder potentielle ionische Verbindungen sind solche, die über Carboxy- und / oder Carboxylatgruppen verfügen. Besonders bevorzugte ionische Verbindungen sind Dihydroxycarbonsäuren, insbesondere α,α-Dimethylolalkansäuren, wie 2,2-Dimethylolessigsäure, 2,2-Dimethylolpropionsäure, 2,2-Dimethylolbuttersäure, 2,2-Dimethylolpentansäure oder Dihydroxybernsteinsäure.

Zusätzlich können bei der Herstellung des Hydroxy-funktionellen Prepolymers a) auch noch niedermolekulare Kettenverlängerer mit einem Molekulargewicht im Bereich von 60 bis 400 Da und bevorzugt von 62 bis 200 Da und wenigstens zwei Isocyanat reaktiven Gruppen mit umgesetzt werden. Bei den Kettenverlängerern kann es sich beispielsweise um Polyole oder Polyamine handeln.

Als Kettenverlängerer geeignete Polyole können Verbindungen mit bis zu 20 Kohlenstoffatomen je Molekül, wie z.B. Ethylenglykol, Diethylenglykol, Triethylenglykol, 1,2-Propandiol, 1,3-Propandiol, 1,4-Butandiol, 1,3-Butylenglykol, Cyclohexandiol, 1,4-Cyclohexandimethanol, 1,6-Hexandiol, Hydrochinondihydroxyethylether, Bisphenol A [2,2-Bis(4-hydroxyphenyl)propan], hydriertes Bisphenol A (2,2-Bis(4-hydroxycyclohexyl)propan) sowie deren Mischungen, sowie Trimethylolpropan, Glycerin oder Pentaerythrit verwendet werden. Auch Esterdiole wie z.B. δ-Hydroxybutyl-ε-hydroxycapronsäureester, ω-Hydroxy-hexyl-γ-hydroxybuttersäureester, Adipinsäure-(β-hydroxyethyl)ester oder Terephthalsäurebis(β-hydroxyethyl)ester können eingesetzt werden.

Geeignete Polyamine zur Kettenverlängerung sind z.B. Ethylendiamin, 1,2- und 1,3-Diaminopropan, 1,4-Diaminobutan, 1,6-Diaminohexan, Isophorondiamin, das Isomerengemisch von 2,2,4- und 2,4,4-Trimethylhexamethylendiamin, 2-Methylpentamethylendiamin, Diethylentriamin, 1,3- und 1,4-Xylylendiamin, α,α,α',α'-Tetramethyl-1,3- und -1,4-xylylendiamin und 4,4-Diaminodicyclohexylmethan, Dimethylethylendiamin, Hydrazin oder Adipinsäuredihydrazid.

Bei der Herstellung des Hydroxy-funktionellen Prepolymers a) kann auch noch ein Kettenabbrecher mit umgesetzt werden. Diese Bausteine leiten sich beispielsweise von monofunktionellen, mit Isocyanat Gruppen reaktiven Verbindungen, wie Monoaminen, insbesondere mono-sekundären Aminen oder Monoalkoholen ab. Genannt seien hier insbesondere Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin oder deren substituierte Derivate, Amidoamine aus diprimären Aminen und Monocarbonsäuren, Monoketimine von diprimären Aminen, primär / tertiäre Amine, wie z.B. N,N-Dimethylaminopropylamin.

Für das Polyurethanharz können auch Einheiten Verwendung finden, die an den Kettenenden lokalisiert sind und dieses abdeckt. Diese Einheiten stammen einerseits von monofunktionellen, isocyanat-reaktiven Komponenten, insbesondere mono-sekundäre Amine oder Monoalkohole. Im Folgenden werden einige dieser Substanzen beispielhaft erläutert: Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-methylaminopropylamin, Diethyl(methyl)aminopropylamin, Morpholin, Piperidin, oder substituierte Derivate der genannten Verbindungen. Amidoamine von diprimären Aminen und Mono, Monocarbonsäuren, Monoketimine der Diprimären Amine, primäre/sekundäre/tertiäre Amine - wie beispielsweise - N,N-Dimethylaminopropylamin, Methyldimethylamin.

Ebenso geeignete Verbindungen, sind Substanzen, die aktive Wasserstoffatome enthalten, die in der Reaktivität zwischen den Isocyanatgruppen unterscheiden können. Dies sind beispielsweise Moleküle die neben einer primären Aminogruppe auch eine sekundäre Aminogruppe oder neben einer OH Gruppe auch eine COOH Gruppe oder neben einer Aminogruppe (primär oder sekundär) auch OH Gruppen enthalten. Bevorzugt sind Komponenten, die neben einer Aminogruppe (primär oder sekundär) auch OH Gruppen enthalten. Beispiele für solche primären / sekundären Amine sind: 3-Amino-1-methylaminopropan, 3-Amino-1-ethylaminopropan, 3-Amino-1-cyclohexylaminopropan, 3-Amino-1-methylaminobutan; Mono-hydroxy-carboxylsäuren, wie beispielsweise Hydroxyessigsäure, Milchsäure oder Maleinsäure, und auch Alkanolamine wie beispielsweise N-Aminoethylethanolamin, Ethanolamin, 3-Aminopropanol, Neopentanolamin, und, mit entsprechender Bevorzugung, Diethanolamin, Methyldiethanolamin. Auf diese Weise ist es möglich in das Polymer zusätzliche funtkionelle Gruppen einzuführen.

Ebenfalls sind als Kettenabbrecherverbindungen geeignet, die aktive Wasserstoff-Atome mit gegenüber Isocyanat-Gruppen unterschiedlicher Reaktivität enthalten. Dies sind z.B. Verbindungen, die neben einer primären Aminogruppe auch sekundäre Aminogruppen oder neben einer OH-Gruppe auch COOH-Gruppen oder neben einer Aminogruppe (primär oder sekundär) auch OH-Gruppen aufweisen. Bevorzugt sind Verbindungen, die neben einer Aminogruppe (primär oder sekundär) auch OH-Gruppen aufweisen. Beispiele hierfür sind primäre / sekundäre Amine, wie 3-Amino-1-Methylaminopropan, 3-Amino-1-Ethylaminopropan, 3-Amino-1-cyclohexylaminopropan, 3-Amino-1-Methylaminobutan; Mono-Hydroxycarbonsäuren, wie Hydroxyessigsäure, Milchsäure oder Äpfelsäure, weiterhin Alkanolamine wie N-Aminoethylethanolamin, Ethanolamin, 3-Aminopropanol, Neopentanolamin und besonders bevorzugt Diethanolamin. Auf diese Weise können zusätzlich funktionelle Gruppen in das polymere Endprodukt eingebracht werden.

Es ist ebenfalls möglich, dass bei der Herstellung des Hydroxy-funktionellen Prepolymers a) auch noch nichtionisch hydrophilierend wirkende Verbindungen, z.B. Polyoxyalkylenether mit mindestens einer Hydroxy- oder Aminogruppe, mit umgesetzt werden. Diese Polyether enthalten einen Anteil von 30 Gew.-% bis 100 Gew.-% an Bausteinen, die vom Ethylenoxid abgeleitet sind. In Frage kommen linear aufgebaute Polyether mit einer Funktionalität zwischen 1 und 3, aber auch Verbindungen der allgemeinen Formel (I), 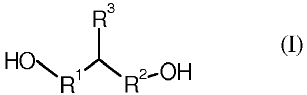 in welcher
R₁ und Runabhängig voneinander jeweils einen zweiwertigen aliphatischen, cycloaliphatischen oder aromatischen Rest mit 1 bis 18 C-Atomen, die durch Sauerstoff und / oder Stickstoffatome unterbrochen sein können, bedeuten und
R₃ für einen nicht-hydroxyterminierten Polyester oder bevorzugt Polyether, insbesondere für einen alkoxyterminierten Polyethylenoxidrest steht.

Die Urethanisierungsreaktion bei der Prepolymer-Herstellung kann bei Temperaturen von 0° bis 140°C, je nach Reaktivität des eingesetzten Polyisocyanats, durchgeführt werden. Zur Beschleunigung der Urethanisierungsreaktion können geeignete Katalysatoren, wie sie zur Beschleunigung der NCO-OH-Reaktion dem Fachmann bekannt sind, eingesetzt werden. Beispiele sind tertiäre Amine wie z.B. Triethylamin, Organozinnverbindungen wie z.B. Dibutylzinnoxid, Dibutylzinndilaurat oder Zinn-bis(2-ethylhexanoat) oder andere metallorganische Verbindungen.

Als Vernetzer geeignete Verbindungen sind Melamin Formaledehyd oder Urea Formaldehyd Kondensate, wie sie beispielsweise in D.H. Solomon, The Chemistry of Organic Filmformers, Seiten 235 ff., John Wiley & Sons, Inc., New York, 1967 beschrieben sind. Die Melaminharze können aber auch vollständig oder teilweise gegen andere Aminharze wie sie beispielsweise in Methoden der organischen Chemie (Houben-Weyl), Vol. 14/2, Teil2, 4th Edition, Georg Thieme Verlag, Stuttgart 1963, Seiten 319 ff. beschrieben sind, ersetzt werden.

Andere geeignete Vernetzungsharze sind blockierte Polyisocyanate, basierend beispielsweise auf Isophorondiisocyanat, Hexametzhylendiisocyanat, 1,4-Diisocyanatcyclohexan, Bis-(4-Isocyanatcyclohexyl)-methan, 1,3-Diisocyanatbenzol, 1,4-Diisocyanatbenzol, 2,4-Diisocyanat-1-methyl-benzol, 1,3-Diisocyanat-2-methylbenzol, 1,3-Bisisocyanatmethylbenzol, 2,4-bis-Isocyanatmethyl-1,5-dimethylbenzol, Bis-(4-isocyanatphenyl)-propan, Tris-(4-Isocyanatphenyl)methan und / oder Trimethyl-1,6-diisocyanathexan.

Des Weiteren sind ebenfalls blockierte Isocyanataddukte wie beispielsweise Biuretpolyisocyanate basierend auf 1,6-Diisocyanathexan; Isocyanurat Polyisocyanate basierend auf 1,6-Diisocyanathexan; oder Urethanmodifizierte Polyisocyanataddukte hergestellt aus 2,4-und / oder 2,6-Diisocyanatotoluol oder Isophorondiisocyanat und niedrig molekulargewichtige Polyhydroxyl Komponenten (wie beispielsweise Trimethylolpropan, die isomeren Propandiol oder Butandiol oder Mischungen solcher Polyhydroxylkomponenenten), wobei die Isocyanatgruppe des Polyisocyanatadduktes blockiert ist, geeignet.

Geeignete Blockierungsmittel für diese Polyisocyanate sind monofunktionelle Alkohole, wie Methanol, Ethanol, Butanol, Hexanol und Benzylalkohol; Oxime wie Acetoxime und Methylethylketoxim; Laktame wie Epsiloncaprolactam; Phenol; und CH-acide Komponenten wie beispielsweise Diethylmalonat.

Ebenfalls geeignete Vernetzer sind Polyisocyanatvernetzer, Amid- und Aminformaldehydharze, Phenolharze, Aldehydharze und Ketonharze, wie beispielsweise Phenolformaldehydharz, Resole, Furanharze, Ureaharze, Carbaminesterharze, Triazinharze, Melaminharze, Benzoguanaminharze, Cyanamidharze, Anilinharze, wie dies in 'Lackharze', D. Stoye, W.Freitag, Carl Hanser Verlag, München, 1996, beschrieben ist.

Bei einer bevorzugten Ausführungsform kann der Vernetzer c) als gegenüber Hydroxy reaktive Gruppen wenigstens zwei Isocyanat Gruppen aufweisen.

Geeignete Isocyanat funktionalisierte Vernetzer sind beispielsweise niedrig viskose, hydrophobe oder hydrophilisierte Polyisocyanate mit freien Isocyanatgruppen, basierend auf aliphatischen, cycloaliphatischen, araliphatischen und / oder aromatischen Isocyanaten, besonders bevorzugt basierend auf aliphatischen oder cycloaliphatischen Isocyanaten, da es auf diesem Wege möglich ist ein besonders hohes Niveau an Widerstandsfähigkeit im Lackfilm einzustellen. Der Vorteil der Bindemitteldispersion in dieser Erfindung ist insbesondere in Kombination mit diesen Vernetzern gegeben. Wenn notwendig können die Polyisocyanate auch als Mischung des Polyisocyanates und kleiner Mengen von inerten Lösungsmitteln oder inerten Lösungsmittelgemischen - zur Reduktion des Viskositätsniveau - eingesetzt werden. Triisocyanatnonane können ebenso alleine oder in Mischung mit anderen als Vernetzungskomponente eingesetzt werden.

Vorteilhaft ist auch, wenn der Vernetzer c) eine Viskosität bei 23° C von 10 bis 10000 mPas aufweist.

Die Viskosität des Vernetzers kann dabei gemäß DIN 53019 bei einem Schergefälle von 40 s⁻¹ bestimmt werden.

Neben den bereits genannten Effekten zeigte sich, dass das erfindungsgemäße Beschichtungsmittel eine hohe Lagerstabilität aufweist.

Ein weiterer Gegenstand der vorliegenden Erfindung ist ein Verfahren zur Herstellung des erfindungsgemäßen Beschichtungsmittels, bei dem in einem ersten Schritt die wässrige Dispersion a) hergestellt, in einem zweiten Schritt ein Gemisch aus der wässrigen Dispersion a) und den Nanopartikeln b) hergestellt und in einem dritten Schritt der Vernetzer zu dem Gemisch hinzugefügt wird.

Ebenfalls Gegenstand der Erfindung ist die Verwendung des erfindungsgemäßen Beschichtungsmittels zur Herstellung einer Beschichtung auf einem Substrat, insbesondere auf einem Kunststoffsubstrat.

Noch ein weiterer Gegenstand der Erfindung ist eine Beschichtung, die durch Applikation des erfindungsgemäßen Beschichtungsmittels auf ein Substrat, insbesondere auf ein Kunststoffsubstrat, erhältlich ist.

Die Erfindung wird im Folgenden anhand von Beispielen näher erläutert.

### Methoden

Alle Angaben in % beziehen sich - soweit nicht anders vermerkt - auf das Gewicht.

Viskositätsmessungen wurden in einem Kegel-Platte-Viskosimeter nach DIN 53019 bei einem Schergefälle von 40s⁻¹ durchgeführt.

Die Säurezahl wurde gemäß DIN 53402 (mg KOH/g Probe, Titration mit 0.1 mol/l NaOH Lösung) bestimmt.

Der Festkörpergehalt wurde gemäß DIN EN ISO 3251 (Dickschichtmethode: lid, 1 g Probe, 1 h 125°C, Konvektionsofen) bestimmt.

Die OH Zahl wurde gemäß DIN 53240 (mg KOH/g Probe, Acetylierung, Hydrolyse, Titration mit 0.1 mol/l NaOH) bestimmt.

Der pH Wert wurde gemäß International Standard ISO 976 gemessen.

Das Molekulargewicht (Mn, Mw) wurde mittels GPC (Gelpermeationschromatographie) bestimmt. Die Proben wurden mit Hilfe des Eluenten Tetrahydrofuran gemäß DIN 55672-1 untersucht. Mn (UV) = zahlenmittleres Molekulargewicht (GPC, UV Detektion), Ergebnis in g/mol; Mw (UV) = gewichtsmittleres Molekulargewicht (GPC, UV Detektion), Ergebnis in g/mol.

Die mittlere Partikelgröße wurde mittels Laserkorrelationsspektroskopie gemessen.

### Substanzen

Desmorapid SO: Sn(II)-octoat
Desmodur W: Diisocyanatodicyclohexylmethan (H12-MDI)
Desmodur H: Hexamethylendiisocyanat (HDI)
Tanafoam DNE 01: Entschäumer; Mischung von Fettsäureestern und höherwertigen Kohelnwasserstoffcarbonsäuresalzen, Tanatex, DE
BYK 348: Polyether modifiziertes Siloxan Tensid, BYK, DE
Aquacer 110 RC 1174: Wachsadditiv, BYK, DE
Tego Wet KL245: Polyethersiloxan Copolymer, Evonik, DE
Sillitin Z 86: Tonfüller, Hoffmann Mineral, DE
Acematt 3300: Modifiziertes pyrogenes Silika, Evonik, DE
Desmodur® N 3600: HDI Trimer
Bayhydur® XP 2655: Hydrophiliertes aliphatisches Polyisocyanat basierend auf HDI
MPA: Methylpropylacetat (1-Methoxy-2-Propanolacetat)
Makrofol: Thermoplastische Folie aus Polycarbonat, Bayer MaterialScience, DE

### Beispiele (Beschichtungsmittel)

### • Bindemittel

### Beispiel 1 (erfindungsgemäß)

In einem 15 l Reaktionsgefäß mit Rührer, Heizvorrichtung und Wasserabscheider mit Kühlvorrichtung wurden 1281 g Phthalsäureanhydrid, 5058 g Adipinsäure, 6387 g 1,6-Hexandiol und 675 g Neopentylglykol eingewogen und unter Stickstoff in einer Stunden auf 140° C aufgeheizt. In weiteren 9 Stunden heizte man auf 220° C auf und kondensiert bei dieser Temperatur so lange, bis eine Säurezahl kleiner 3 erreicht ist. Das so erhaltene Polyesterharz hatte eine Viskosität (bestimmt als Auslaufzeit einer 80-%igen Lösung des Polyesters in Methoxypropylacetat im DIN 4-Becher bei 23° C) von 54 Sekunden und eine OH-Zahl von 160 mg KOH/g.

In einem 6 l Reaktionsgefäß mit Kühl-, Heiz- und Rührvorrichtung wurden in einer Stickstoffatmosphäre 2628 g des oben beschriebenen Polyesters vorgelegt und zusammen mit 2557 g eines linearen Polyestercarbonatdiols des zahlenmittleren Molekulargewichts 2000, 280 g Dimethylolpropionsäure, 415 g Trimethylolpropan und 8,8 g Zinn-(II)-octoat auf 130° C aufgeheizt und 30 min homogenisiert. Anschließend kühlte man auf 80° C ab, gab 1120 g Hexamethylendiisocyanat unter kräftigem Rühren zu, heizte (unter Ausnutzung der Exothermie der Reaktion) auf 140° C auf und hielt das Gemisch solange bei dieser Temperatur, bis sich keine NCO-Gruppen mehr feststellen waren.

Anschließend kühlte man das so erhaltene Polyurethan auf 90° C - 100° C ab, gab 102 g Dimethylethanolamin (Neutralisationsgrad 70 %) zu und homogenisierte das Gemisch. Anschließend folgte die Weiterverarbeitung des Harzes zu einer Dispersion bei einer Temperatur von 70° C - 80° C mittels entmineralisiertem Wasser unter starkem Rühren.

Innerhalb von 10 min wurde zu der so erhaltenen Dispersion eine ca. 30 Gew.-%ige Siliziumdioxidnanopartikeldispersion zugegeben. Anschließend wurde bei 40° C innerhalb einer Stunde homogenisiert.

Die so erhaltene Dispersion zeigte einen Festkörper von 48,6 Gew.-%, eine Säurezahl von 15,3, eine Viskosität von 1040 mPas, einen pH-Wert von 7,7 und eine mittlere Teilchengröße von 166 nm.

### Beispiel 2 (erfindungsgemäß)

In einem 15 l Reaktionsgefäß mit Rührer, Heizvorrichtung und Wasserabscheider mit Kühlvorrichtung wurden 1190 g Phthalsäureanhydrid, 5005 g Adipinsäure, 6337 g 1,6-Hexandiol und 635 g Neopentylglykol eingewogen und unter Stickstoff in einer Stunden auf 140° C aufgeheizt. In weiteren 9 Stunden heizte man auf 220° C auf und kondensiert bei dieser Temperatur so lange, bis eine Säurezahl kleiner 3 erreicht ist. Das so erhaltene Polyesterharz hatte eine Viskosität (bestimmt als Auslaufzeit einer 80-%igen Lösung des Polyesters in Methoxypropylacetat im DIN 4-Becher bei 23° C) von 54 Sekunden und eine OH-Zahl von 157 mg KOH/g.

In einem 6 l Reaktionsgefäß mit Kühl-, Heiz- und Rührvorrichtung wurden in einer Stickstoffatmosphäre 2565 g des oben beschriebenen Polyesters vorgelegt und zusammen mit 2493 g eines linearen Polyestercarbonatdiols des zahlenmittleren Molekulargewichts 2000, 272 g Dimethylolpropionsäure, 409 g Trimethylolpropan und 8,5 g Zinn-(II)-octoat auf 130° C aufgeheizt und 30 min homogenisiert. Anschließend kühlte man auf 80° C ab, gab 1050 g Hexamethylendiisocyanat unter kräftigem Rühren zu, heizte (unter Ausnutzung der Exothermie der Reaktion) auf 140° C auf und hielt das Gemisch solange bei dieser Temperatur, bis sich keine NCO-Gruppen mehr feststellen waren.

Anschließend kühlte man das so erhaltene Polyurethan auf 90° C - 100° C ab, gab 93 g Dimethylethanolamin (Neutralisationsgrad 70 %) zu und homogenisierte das Gemisch. Anschließend folgte die Weiterverarbeitung des Harzes zu einer Dispersion bei einer Temperatur von 70° C - 80° C mittels entmineralisiertem Wasser unter starkem Rühren.

Innerhalb von 10 min wurde zu der so erhaltenen Dispersion eine ca. 30 Gew.-%ige Siliziumdioxidnanopartikeldispersion zugegeben. Anschließend wurde bei 40° C innerhalb einer Stunde homogenisiert.

Die so erhaltene Dispersion zeigte einen Festkörper von 47,1 Gew.-%, eine Säurezahl von 14,9, eine Viskosität von 1006 mPas, einen pH-Wert von 7,6 und eine mittlere Teilchengröße von 158 nm.

### Beispiel 3 (erfindungsgemäß)

In einem 15 l Reaktionsgefäß mit Rührer, Heizvorrichtung und Wasserabscheider mit Kühlvorrichtung wurden 1346 g Phthalsäureanhydrid, 5107 g Adipinsäure, 6439 g 1,6-Hexandiol und 706 g Neopentylglykol eingewogen und unter Stickstoff in einer Stunden auf 140° C aufgeheizt. In weiteren 9 Stunden heizte man auf 220° C auf und kondensiert bei dieser Temperatur so lange, bis eine Säurezahl kleiner 3 erreicht ist. Das so erhaltene Polyesterharz hatte eine Viskosität (bestimmt als Auslaufzeit einer 80-%igen Lösung des Polyesters in Methoxypropylacetat im DIN 4-Becher bei 23° C) von 54 Sekunden und eine OH-Zahl von 166 mg KOH/g.

In einem 6 l Reaktionsgefäß mit Kühl-, Heiz- und Rührvorrichtung wurden in einer Stickstoffatmosphäre 2716 g des oben beschriebenen Polyesters vorgelegt und zusammen mit 2643 g eines linearen Polyestercarbonatdiols des zahlenmittleren Molekulargewichts 2000, 294 g Dimethylolpropionsäure, 457 g Trimethylolpropan und 9,1 g Zinn-(II)-octoat auf 130° C aufgeheizt und 30 min homogenisiert. Anschließend kühlte man auf 80° C ab, gab 1205 g Hexamethylendiisocyanat unter kräftigem Rühren zu, heizte (unter Ausnutzung der Exothermie der Reaktion) auf 140° C auf und hielt das Gemisch solange bei dieser Temperatur, bis sich keine NCO-Gruppen mehr feststellen waren.

Anschließend kühlte man das so erhaltene Polyurethan auf 90° C - 100° C ab, gab 117 g Dimethylethanolamin (Neutralisationsgrad 70 %) zu und homogenisierte das Gemisch. Anschließend folgte die Weiterverarbeitung des Harzes zu einer Dispersion bei einer Temperatur von 70° C - 80° C mittels entmineralisiertem Wasser unter starkem Rühren.

Innerhalb von 10 min wurde zu der so erhaltenen Dispersion eine ca. 30 Gew.-%ige Siliziumdioxidnanopartikeldispersion zugegeben. Anschließend wurde bei 40° C innerhalb einer Stunde homogenisiert.

Die so erhaltene Dispersion zeigte einen Festkörper von 49,8 Gew.-%, eine Säurezahl von 15,9, eine Viskosität von 1106 mPas, einen pH-Wert von 7,9 und eine mittlere Teilchengröße von 173 nm.

### Beispiel 4 (nicht erfindungsgemäß)

In einem 15 l Reaktionsgefäß mit Rührer, Heizvorrichtung und Wasserabscheider mit Kühlvorrichtung wurden 1281 g Phthalsäureanhydrid, 5058 g Adipinsäure, 6387 g 1,6-Hexandiol und 675 g Neopentylglykol eingewogen und unter Stickstoff in einer Stunden auf 140° C aufgeheizt. In weiteren 9 Stunden heizte man auf 220° C auf und kondensierte bei dieser Temperatur so lange, bis eine Säurezahl kleiner 3 erreicht war. Das so erhaltene Polyesterharz hatte eine Viskosität (bestimmt als Auslaufzeit einer 80-%igen Lösung des Polyesters in Methoxypropylacetat im DIN 4-Becher bei 23° C) von 54 Sekunden und eine OH-Zahl von 160 mg KOH/g.

In einem 3 l Reaktionsgefäß mit Kühl-, Heiz- und Rührvorrichtung wurden in einer Stickstoffatmosphäre 585 g des oben beschriebenen Polyesters vorgelegt und zusammen mit 570 g eines linearen Polyestercarbonatdiols des zahlenmittleren Molekulargewichts 2000, 60 g Dimethylolpropionsäure, 45 g Trimethylolpropan und 1,9 g Zinn-(II)-octoat auf 130° C aufgeheizt und 30 min homogenisiert. Anschließend kühlte man auf 80° C ab, gab 240 g Hexamethylendiisocyanat unter kräftigem Rühren zu, heizte (unter Ausnutzung der Exothermie der Reaktion) auf 140° C auf und hielt das Gemisch solange bei dieser Temperatur, bis sich keine NCO-Gruppen mehr feststellen ließen.

Anschließend kühlte man das so erhaltene Polyurethan auf 90° C - 100° C ab, gab 102 g Dimethylethanolamin (Neutralisationsgrad 70 %) zu und homogenisiert das Gemisch. Anschließend folgte die Weiterverarbeitung des Harzes zu einer Dispersion bei einer Temperatur von 70° C - 80° C mittels entmineralisiertem Wasser unter starkem Rühren.

Die so erhaltene Dispersion zeigte einen Festkörper von 53,6 Gew.-%, eine Säurezahl von 18,3, eine Viskosität von 2360 mPas, einen pH-Wert von 7,5 und eine mittlere Teilchengröße von 104 nm.

### Beispiel 5 (nicht erfindungsgemäß)

In einem 15 l Reaktionsgefäß mit Rührer, Heizvorrichtung und Wasserabscheider mit Kühlvorrichtung wurden 1281 g Phthalsäureanhydrid, 5058 g Adipinsäure, 6387 g 1,6-Hexandiol und 675 g Neopentylglykol eingewogen und unter Stickstoff in einer Stunden auf 140° C aufgeheizt. In weiteren 9 Stunden heizte man auf 220° C auf und kondensiert bei dieser Temperatur so lange, bis eine Säurezahl kleiner 3 erreicht ist. Das so erhaltene Polyesterharz hatte eine Viskosität (bestimmt als Auslaufzeit einer 80-%igen Lösung des Polyesters in Methoxypropylacetat im DIN 4-Becher bei 23° C) von 54 Sekunden und eine OH-Zahl von 160 mg KOH/g.

In einem 6 l Reaktionsgefäß mit Kühl-, Heiz- und Rührvorrichtung wurden in einer Stickstoffatmosphäre 2808 g des oben beschriebenen Polyesters vorgelegt und zusammen mit 145 g Dimethylolpropionsäure, 86 g Trimethylolpropan und 4,5 g Zinn-(II)-octoat auf 130° C aufgeheizt und 30 min homogenisiert. Anschließend kühlte man auf 80° C ab, gab 580 g Hexamethylendiisocyanat unter kräftigem Rühren zu, heizte (unter Ausnutzung der Exothermie der Reaktion) auf 140° C auf und hielt das Gemisch solange bei dieser Temperatur, bis sich keine NCO-Gruppen mehr feststellen ließen.

Anschließend kühlte man das so erhaltene Polyurethan auf 90° C - 100° C ab, gab 68 g Dimethylethanolamin (Neutralisationsgrad 70 %) zu und homogenisierte das Gemisch. Anschließend folgte die Weiterverarbeitung des Harzes zu einer Dispersion bei einer Temperatur von 70° C - 80° C mittels entmineralisiertem Wasser unter starkem Rühren.

Innerhalb von 10 min wurde zu der so erhaltenen Dispersion eine ca. 30 Gew.-%ige Siliziumdioxidnanopartikeldispersion zugegeben. Anschließend wurde bei 40° C innerhalb einer Stunde homogenisiert.

Die so erhaltene Dispersion zeigte einen Festkörper von 47,1 Gew.-%, eine Säurezahl von 19,9, eine Viskosität von 1610 mPas, einen pH-Wert von 7,8 und eine mittlere Teilchengröße von 115 nm.

Es zeigte sich, dass die erhaltene Dispersion nach einem Monat fest geworden war und somit nicht weiter hinsichtlich der mattierenden Eigenschaften des hieraus herzustellenden Beschichtungsmittels untersucht werden konnte.

### • Lackherstellung

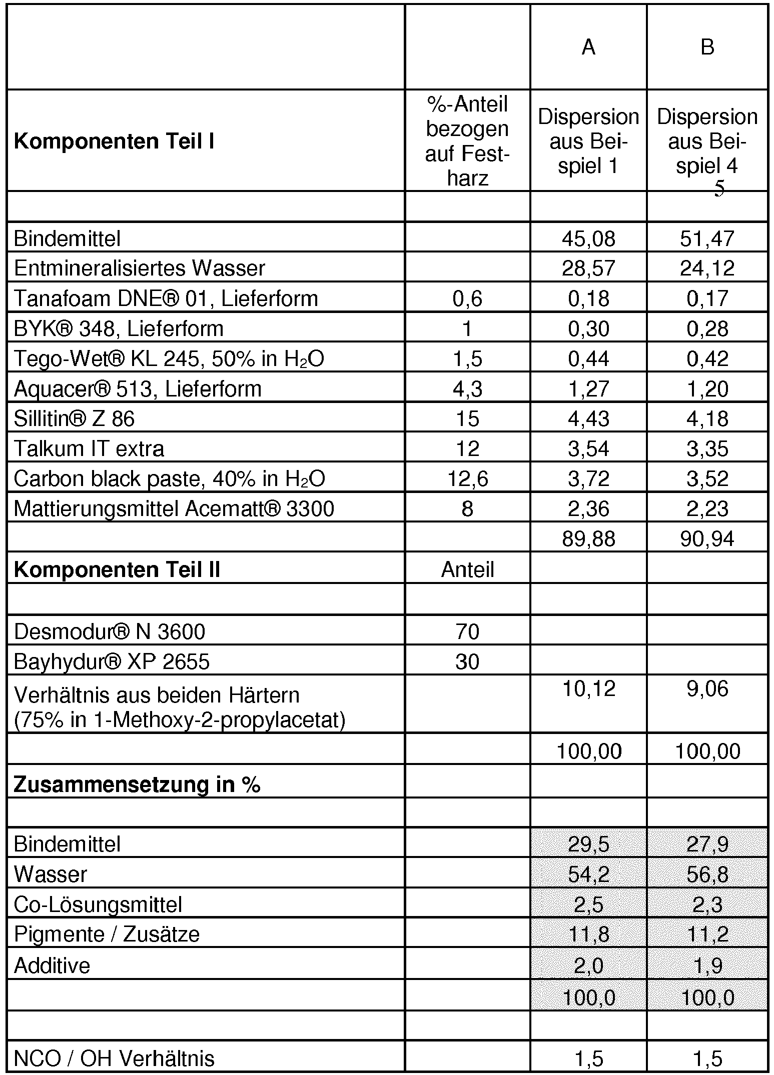

### Anwendungstechnische Prüfung

Zur Untersuchung des lacktechnischen Profils wurden auf Makrofol Platten wässrige 2 K Lacke (Beispiel A und B) jeweils durch Aufspritzen appliziert. Der trockene Lackfilm wurde dann hinsichtlich der Glanzwerte und Haptik/Elastizität untersucht.

| Ansatz | Glanz* (20° / 60° / 85°) | Haptik/Elastizität** |
|---|---|---|
| Aus Beispiel A | 0 / 0,3 / 2,8 | 3 |
| Aus Beispiel B | 0,2 / 2,2 / 3,9 | 4 |

| | | |
|---|---|---|
| *Glanz/Haze-Messung: Reflektometer (Haze/Gloss), Byk-Gardner Typ 2.8 **Skala 1 - 5 (sehr gut - schlecht): Maß für den Softfeel Effekt bzw. Elastizität einer Oberfläche. Je weicher eine Beschichtung desto besser die Bewertung. | | |

Aus diesen Ergebnissen lässt sich erkennen, dass es sich bei den Beschichtungen, die auf Beispiel A basieren deutlich mattere Filme herstellen lassen. Des Weiteren zeigt sich auch, dass auch A deutlich elastischere Beschichtungen ergibt.

## Patentansprüche

1. Beschichtungsmittel umfassend
a) eine wässrige Dispersion eines Hydroxy-funktionellen Prepolymers, erhältlich durch Umsetzung wenigstens der folgenden Komponenten:
i) einer Hydroxy Gruppen aufweisenden Komponente, die ein Polycarbonatpolyol umfasst oder daraus besteht,
ii) einem Hydroxy Gruppen aufweisenden Polyesterpolyol,
iii) einem Isocyanat Gruppen aufweisendem Polyisocyanat,
iv) einer Verbindung, die wenigstens zwei gegenüber Isocyanatgruppen reaktive Gruppen und wenigstens eine zur Anionenbildung befähigte Gruppe aufweist,
v) Wasser,
wobei die Komponenten i)-iii) und das Verhältnis der Komponenten i)-iii) so gewählt wird, dass gegenüber den Isocyanat Gruppen ein Überschuss an Hydroxy Gruppen vorhanden ist,
b) Anorganische Nanopartikel mit einer zahlenmittleren Partikelgröße von 5 bis 100 nm und
c) einen Vernetzer, der wenigstens zwei gegenüber Hydroxygruppen reaktive Gruppen aufweist.

2. Beschichtungsmittel nach Anspruch 1, **dadurch gekennzeichnet, dass** die Nanopartikel eine spezifische Oberfläche von 100 m²/g bis 1000 m²/g, bevorzugt von 200 bis 500 m²/g und besonders bevorzugt von 250 bis 400 m²/g aufweisen.

3. Beschichtungsmittel nach einem der Ansprüche 1 oder 2, **dadurch gekennzeichnet, dass** die Nanopartikel aus Siliziumdioxid, Titandioxid, Aluminiumoxid, Aluminiumdioxid, Mangandioxid, Manganoxid, Zinkoxid, Zinkdioxid, Ceroxid, Cerdioxid, Eisenoxid, Eisendioxid, Calciumcarbonat und besonders bevorzugt aus Siliziumdioxid bestehen.

4. Beschichtungsmittel nach einem der Ansprüche 1 bis 3, **dadurch gekennzeichnet, dass** es zusätzlich wenigstens ein Mattierungsmittel d) umfasst.

5. Beschichtungsmittel nach einem der Ansprüche 1 bis 4, **dadurch gekennzeichnet, dass** das Polycarbonatpolyol ein gewichtsmittleres Molekulargewicht von 500 bis 3000 g/mol, bevorzugt 650 bis 2500 g/mol und besonders bevorzugt 1000 bis 2200 g/mol aufweist.

6. Beschichtungsmittel nach einem der Ansprüche 1 bis 5, **dadurch gekennzeichnet, dass** das Polyisocyanat iii) ein aliphatisches Isocyanat, bevorzugt ein aliphatisches Diisocyanat und besonders bevorzugt wenigstens eine Verbindung ausgewählt aus der Gruppe von Hexamethylendiisocyanat, Isophorondiisocyanat, 1-Isocyanato-4-[(4-isocyanatocyclohexyl) methyl]cyclohexan umfasst.

7. Beschichtungsmittel nach einem der Ansprüche 1 bis 6, **dadurch gekennzeichnet, dass** der Vernetzer c) als gegenüber Hydroxy reaktive Gruppen wenigstens zwei Isocyanat Gruppen aufweist.

8. Beschichtungsmittel nach einem der Ansprüche 1 bis 7, **dadurch gekennzeichnet, dass** der Vernetzer c) eine Viskosität bei 23° C von 10 bis 10000 mPas aufweist.

9. Verfahren zur Herstellung eines Beschichtungsmittels nach einem der Ansprüche 1 bis 8, **dadurch gekennzeichnet, dass** in einem ersten Schritt die wässrige Dispersion a) hergestellt, in einem zweiten Schritt ein Gemisch aus der wässrigen Dispersion a) und den Nanopartikeln b) hergestellt und in einem dritten Schritt der Vernetzer zu dem Gemisch hinzugefügt wird.

10. Verwendung eines Beschichtungsmittels nach einem der Ansprüche 1 bis 8 zur Herstellung einer Beschichtung auf einem Substrat.

11. Verwendung nach Anspruch 10, **dadurch gekennzeichnet, dass** das Substrat ein Kunststoffsubstrat ist.

12. Beschichtung, erhältlich durch Applikation eines Beschichtungsmittels nach einem der Ansprüche 1 bis 8 auf ein Substrat.

13. Beschichtung nach Anspruch 12 **dadurch gekennzeichnet, dass** das Substrat ein Kunststoffsubstrat ist.

## Claims

1. Coating composition comprising
a) an aqueous dispersion of a hydroxy-functional prepolymer, obtainable by reaction of at least the following components:
i) a component comprising hydroxy groups, which comprises or consists of a polycarbonate polyol,
ii) a polyester polyol comprising hydroxy groups,
iii) a polyisocyanate comprising isocyanate groups,
iv) a compound which comprises at least two groups reactive towards isocyanate groups and at least one group capable of anion formation,
v) water,
wherein components i)-iii) and the ratio of components i)-iii) are so chosen that an excess of hydroxy groups is present relative to the isocyanate groups,
b) inorganic nanoparticles having a number-average particle size of from 5 to 100 nm, and
c) a crosslinker comprising at least two groups reactive towards hydroxy groups.

2. Coating composition according to claim 1, **characterised in that** the nanoparticles have a specific surface area of from 100 m²/g to 1000 m²/g, preferably from 200 to 500 m²/g and particularly preferably from 250 to 400 m²/g.

3. Coating composition according to either of claims 1 and 2, **characterised in that** the nanoparticles consist of silicon dioxide, titanium dioxide, aluminium oxide, aluminium dioxide, manganese dioxide, manganese oxide, zinc oxide, zinc dioxide, cerium oxide, cerium dioxide, iron oxide, iron dioxide, calcium carbonate, and particularly preferably of silicon dioxide.

4. Coating composition according to any one of claims 1 to 3, **characterised in that** it additionally comprises at least one matting agent d).

5. Coating composition according to any one of claims 1 to 4, **characterised in that** the polycarbonate polyol has a weight-average molecular weight of from 500 to 3000 g/mol, preferably from 650 to 2500 g/mol and particularly preferably from 1000 to 2200 g/mol.

6. Coating composition according to any one of claims 1 to 5, **characterised in that** the polyisocyanate iii) comprises an aliphatic isocyanate, preferably an aliphatic diisocyanate and particularly preferably at least one compound selected from the group of hexamethylene diisocyanate, isophorone diisocyanate, 1-isocyanato-4-[(4-isocyanatocyclohexyl)methyl]cyclohexane.

7. Coating composition according to any one of claims 1 to 6, **characterised in that** the crosslinker c) comprises as hydroxy-reactive groups at least two isocyanate groups.

8. Coating composition according to any one of claims 1 to 7, **characterised in that** the crosslinker c) has a viscosity at 23°C of from 10 to 10,000 mPas.

9. Process for the preparation of a coating composition according to any one of claims 1 to 8, **characterised in that** in a first step the aqueous dispersion a) is prepared, in a second step a mixture of the aqueous dispersion a) and the nanoparticles b) is prepared, and in a third step the crosslinker is added to the mixture.

10. Use of a coating composition according to any one of claims 1 to 8 for producing a coating on a substrate.

11. Use according to claim 10, **characterised in that** the substrate is a plastics substrate.

12. Coating obtainable by applying a coating composition according to any one of claims 1 to 8 to a substrate.

13. Coating according to claim 12, **characterised in that** the substrate is a plastics substrate.

## Revendications

1. Agent de revêtement comprenant :
a) une dispersion aqueuse d'un prépolymère à fonction hydroxy, pouvant être obtenu par mise en réaction d'au moins les composants suivants :
i) un composant comprenant des groupes hydroxy, qui comprend un polycarbonate-polyol ou en est constitué,
ii) un polyester-polyol comprenant des groupes hydroxy,
iii) un polyisocyanate comprenant des groupes isocyanate,
iv) un composé qui comprend au moins deux groupes réactifs avec les groupes isocyanate et au moins un groupe apte à la formation d'anions,
v) de l'eau,
les composants i) à iii) et le rapport entre les composants i) à iii) étant choisis de telle sorte qu'un excès de groupes hydroxy soit présent par rapport aux groupes isocyanate,
b) des nanoparticules inorganiques ayant une taille de particule moyenne en nombre de 5 à 100 nm, et
c) un agent de réticulation qui comprend au moins deux groupes réactifs avec les groupes hydroxy.

2. Agent de revêtement selon la revendication 1, **caractérisé en ce que** les nanoparticules présentent une surface spécifique de 100 m²/g à 1 000 m²/g, de préférence de 200 à 500 m²/g et de manière particulièrement préférée de 250 à 400 m²/g.

3. Agent de revêtement selon l'une quelconque des revendications 1 ou 2, **caractérisé en ce que** les nanoparticules sont constituées par du dioxyde de silicium, du dioxyde de titane, de l'oxyde d'aluminium, du dioxyde d'aluminium, du dioxyde de manganèse, de l'oxyde de manganèse, de l'oxyde de zinc, du dioxyde de zinc, de l'oxyde de cérium, du dioxyde de cérium, de l'oxyde de fer, du dioxyde de fer, du carbonate de calcium et de manière particulièrement préférée du dioxyde de silicium.

4. Agent de revêtement selon l'une quelconque des revendications 1 à 3, **caractérisé en ce qu'**il comprend en outre au moins un agent matant d).

5. Agent de revêtement selon l'une quelconque des revendications 1 à 4, **caractérisé en ce que** le polycarbonate-polyol présente un poids moléculaire moyen en poids de 500 à 3 000 g/mol, de préférence de 650 à 2 500 g/mol et de manière particulièrement préférée de 1 000 à 2 200 g/mol.

6. Agent de revêtement selon l'une quelconque des revendications 1 à 5, **caractérisé en ce que** le polyisocyanate iii) comprend un isocyanate aliphatique, de préférence un diisocyanate aliphatique et de manière particulièrement préférée au moins un composé choisi dans le groupe constitué par le diisocyanate d'hexaméthylène, le diisocyanate d'isophorone, le 1-isocyanato-4-[(4-isocyanatocyclohexyl)méthyl]cyclohexane.

7. Agent de revêtement selon l'une quelconque des revendications 1 à 6, **caractérisé en ce que** l'agent de réticulation c) comprend au moins deux groupes isocyanate en tant que groupes réactifs avec les groupes hydroxy.

8. Agent de revêtement selon l'une quelconque des revendications 1 à 7, **caractérisé en ce que** l'agent de réticulation c) présente une viscosité à 23 °C de 10 à 10 000 mPas.

9. Procédé de fabrication d'un agent de revêtement selon l'une quelconque des revendications 1 à 8, **caractérisé en ce que**, lors d'une première étape, la dispersion aqueuse a) est fabriquée, lors d'une deuxième étape, un mélange de la dispersion aqueuse a) et des nanoparticules b) est fabriqué et, lors d'une troisième étape, l'agent de réticulation est ajouté au mélange.

10. Utilisation d'un agent de revêtement selon l'une quelconque des revendications 1 à 8 pour la fabrication d'un revêtement sur un substrat.

11. Utilisation selon la revendication 10, **caractérisée en ce que** le substrat est un substrat en plastique.

12. Revêtement, pouvant être obtenu par application d'un agent de revêtement selon l'une quelconque des revendications 1 à 8 sur un substrat.

13. Revêtement selon la revendication 12, **caractérisé en ce que** le substrat est un substrat en plastique.
